# EUROPEAN PATENT APPLICATION

(11) **EP 4 671 562 A1**
(43) Date of publication of application: **31.12.2025**
(21) Application number: 24185062.7
(22) Date of filing: 27.06.2024
(51) Int. Cl.: F16D 48/06

(54) **METHOD FOR CONTROLLING A POWERTRAIN OF AN ELECTRIC VEHICLE AND ASSOCIATED ELECTRIC VEHICLE**

(71) Applicant: Volvo Truck Corporation, 405 08 Göteborg (SE)
(72) Inventor: RIOS, Jean-Benoît, 69330 MEYZIEU (FR)
(74) Representative: Lavoix

(57) **Abstract**

This electric vehicle comprises a dog clutch (48) with a first set of teeth (56) driven by an electric motor and a second set of teeth (58) rotatably coupled to a shaft (26), and an actuator (54) to engage the dog clutch. A method for engaging the dog clutch comprises, in this order:
- detecting a blocking of the dog clutch in a teeth-to-teeth configuration while the actuator tries to engage the dog clutch and while the shaft is rotatably decoupled from output components of the vehicle,
- rotating the first set of teeth in a first direction (R1), to drive the shaft in rotation by friction between the sets of teeth, and
- rotating the first set of teeth in a second direction (R2) opposite to the first, so that the first set of teeth slip against the second set of teeth, enabling the actuator to fully engage the dog clutch.

## Description

### TECHNICAL FIELD

The disclosure relates generally to electric vehicles. In particular aspects, the disclosure relates to a method for controlling a powertrain of an electric vehicle and an associated electric vehicle. The disclosure can be applied to heavy-duty vehicles, such as trucks, buses, and construction equipment, and also to other vehicles, such as automobiles, among other vehicle types. Although the disclosure may be described with respect to a particular vehicle, the disclosure is not restricted to any particular vehicle.

### BACKGROUND

Electric vehicles, in particular heavy-duty electric vehicles, usually comprise a powertrain with an electric motor and with a gearbox in which dog clutches are used to couple together, or decouple from each other, two shafts, to provide multiple gears to the vehicle. For example, such dog clutch allow to couple or decouple a motor shaft and a shaft of the gearbox. Such dog clutches comprise two sets of teeth, that can be moved towards each other or away from each other by an actuator so as to engage or disengage the dog clutch.

A blocking of a dog clutch might occur during engagement of the dog clutch when the two sets of teeth are disengaged from each other but in contact with each other, that is, when both sets of teeth are abutting in the direction of movement of the actuator instead of being properly engaged. When such blocking occurs, it is known to put in rotation the motor shaft with the electric motor of the electric vehicle, so that a relative movement occurs between the two sets of teeth, allowing the dog clutch to fully engage.

However, such method for unblocking a dog clutch is ineffective when the shaft of the gearbox is free to rotate, for example when the shaft is rotatably decoupled from output components of the powertrain. Indeed, due to the friction between the two set of teeth, the shaft of the gearbox tends to be driven in rotation by the motor shaft when the motor shaft is put in rotation.

Hence, there is a need for a method for engaging two shafts with a dog clutch when one of the two shafts is free to rotate.

### SUMMARY

According to a first aspect of the disclosure, a method, for controlling a powertrain of an electric vehicle, wherein the electric vehicle comprises a controller and an actuator controlled by the controller, the powertrain comprising:
- an electric motor, controlled by the controller,
- a shaft, extending along a main axis and configured to selectively drive output components of the powertrain and be rotatably decoupled from said output components,
- a dog clutch comprising a first set of teeth configured to be driven in rotation around the main axis by the electric motor and a second set of teeth rotatably coupled to the shaft.
The actuator is configured to apply an engaging force on the dog clutch to move the first set of teeth and the second set of teeth towards each other along the main axis, so that the dog clutch is operated by the actuator:
- from a disengaged configuration, in which the first set of teeth is disengaged from the second set of teeth and spaced apart from the second set of teeth so that the shaft is rotatably decoupled from the electric motor;
- to an engaged configuration, in which the first set of teeth is engaged with the second set of teeth so that the shaft is driven in rotation around the main axis by the electric motor.
The method comprises:
- when the dog clutch is in the disengaged configuration and the shaft is rotatably decoupled from the output components of the powertrain, applying the engaging force, by the actuator,
- as the engaging force was applied, detecting, by the controller, a blocking of the dog clutch in an intermediate configuration of the dog clutch, in which the first set of teeth is disengaged from the second set of teeth and in which the first set of teeth is in contact with the second set of teeth,
- consequently to said detecting of the blocking of the dog clutch in the intermediate configuration, driving in rotation the first set of teeth around the main axis in a first rotation direction, by the electric motor, while applying the engaging force so that the first set of teeth tends to drive the shaft in rotation around the main axis in the first direction of rotation by friction of the first set of teeth against the second set of teeth in the intermediate configuration of the dog clutch,
- consequently to said driving in rotation of the first set of teeth and consequently to the shaft being brought into rotation around the main axis in the first direction of rotation by friction of the first set of teeth against the second set of teeth, driving in rotation the first set of teeth around the main axis in a second direction of rotation opposite to the first direction of rotation, by the electric motor, while applying the engaging force, so that the first set of teeth tends to slip against the second set of teeth rotating in the first direction of rotation, enabling the dog clutch to reach the engaged configuration due to the engaging force.

The first aspect of the disclosure may seek to ensure unblocking the dog clutch during coupling of the shaft with the electric motor in case of a teeth-to-teeth blockage situation. A technical benefit may include more reliable coupling of the shaft with the electric motor, increasing the reliability of the powertrain.

Optionally in some examples, including in at least one preferred example, the method further comprises, as the first set of teeth tends to drive the shaft in rotation around the main axis in the first direction of rotation, detecting, by the controller, a rotation of the shaft around the main axis in the first direction of rotation, and the first set of teeth is driven in rotation around the main axis in the second direction of rotation consequently to said detecting of the rotation of the shaft. A technical benefit may include ensuring that the shaft is rotating in the first direction before changing the direction of rotation of the first set of teeth, to ensure slip between the first and second sets of teeth.

Optionally in some examples, including in at least one preferred example, the electric vehicle further comprises a speed sensor, configured to provide to the controller data representative of a rotational speed of the shaft around the main axis, and the controller detects a rotation of the shaft around the main axis in the first direction of rotation using said data provided by the speed sensor. A technical benefit may include reliable detection of the rotation of the shaft.

Optionally in some examples, including in at least one preferred example, the controller detects blocking of the dog clutch in its intermediate configuration by analyzing a distance between the first set of teeth and the second set of teeth, along the main axis. A technical benefit may include detecting blocking of the dog clutch in its intermediate configuration in a reliable and precise manner.

Optionally in some examples, including in at least one preferred example, the method further comprises, as the first set of teeth is driven in rotation around the main axis in the second direction of rotation while the engaging force is applied, detecting, by the controller, the dog clutch reaching the engaged configuration. A technical benefit may include allowing the controller to know when the dog clutch reaches the engaged configuration.

Optionally in some examples, including in at least one preferred example, the controller operates the electric motor so that a duration between the detecting of the blocking of the dog clutch in the intermediate configuration and the detecting of the dog clutch reaching the engaged configuration is equal to or under 500 milliseconds, preferably equal to or under 250 milliseconds. A technical benefit may include ensuring that minimal vibration and noise are caused and transmitted to other components of the electric vehicle. The method thus allows for smooth and safe coupling of the shaft with the electric motor.

Optionally in some examples, including in at least one preferred example, the method further comprises, consequently to said detecting of the dog clutch reaching the engaged configuration, stopping the rotation of the first set of teeth around the main axis, by the electric motor. A technical benefit may include ending the method with the electric motor in the same state than before the method is performed, i.e. not rotating, and avoiding accidentally propelling the electric vehicle.

Optionally in some examples, including in at least one preferred example, the actuator continuously applies the engaging force to the dog clutch between the detection of the blocking of the dog clutch in the intermediate configuration and the detection of the dog clutch reaching the engaged configuration. A technical benefit may include ensuring the first and second sets of teeth tend to move towards each other, thus ensuring more reliable engagement of the dog clutch.

Optionally in some examples, including in at least one preferred example, the controller controls the electric motor so that a duration of the rotation of the first set of teeth around the main axis in the first direction of rotation is equal to or under 250 milliseconds and the controller controls the electric motor so that a duration of the rotation of the first set of teeth around the main axis in the second direction of rotation is equal to or under 250 milliseconds. A technical benefit may include avoiding giving too much kinetic energy to the main shaft and ensuring that friction between the first and second sets of teeth is only occurring during a short period of time, thus minimizing tooth wear of the first and second sets of teeth and increasing durability of the dog clutch.

Optionally in some examples, including in at least one preferred example, the controller controls the electric motor so that a maximum torque applied by the electric motor to the first set of teeth during rotation of the first set of teeth in the first direction of rotation is lower than 50 Nm. A technical benefit may include ensuring that the main shaft does not rotate too fast.

Optionally in some examples, including in at least one preferred example, the controller controls the electric motor so that a maximum torque applied by the electric motor to the first set of teeth during rotation of the first set of teeth in the second direction of rotation is lower than, or equal to, a maximum torque applied by the electric motor to the first set of teeth during rotation of the first set of teeth in the first direction of rotation. A technical benefit may include reducing risks for the shaft to rotate in the second direction of rotation after engagement of the dog clutch.

Optionally in some examples, including in at least one preferred example, the second set of teeth is mounted on a carrying structure of the dog clutch, the carrying structure being mounted on splines of the shaft, in a sliding connection along the main axis with the shaft, and the actuator is configured to apply the engaging force on the carrying structure. A technical benefit may include safe and reliable movement of the second set of teeth.

Optionally in some examples, including in at least one preferred example, the first set of teeth is mounted on a motor shaft of the powertrain extending along the main axis and configured to be driven in rotation around the main axis by the electric motor. A technical benefit may include easily coupling the first set of teeth with the electric motor.

Optionally in some examples, including in at least one preferred example, the first set of teeth is mounted on a gear of the motor shaft. A technical benefit may include allowing the first set of teeth to be used in a gearbox having multiple configurations.

Optionally in some examples, including in at least one preferred example, the actuator is further configured to apply a disengaging force on the dog clutch, opposed to the engaging force, to move the first set of teeth and the second set of teeth away from each other along the main axis, so that the dog clutch is operated by the actuator from its engaged configuration to its disengaged configuration. A technical benefit may include allowing the actuator to be used both for engagement and disengagement of the dog clutch.

Optionally in some examples, including in at least one preferred example, the powertrain further comprises an output clutch configured to be operated between a disengaged configuration, in which the shaft is configured to be rotatably decoupled from the output components of the powertrain, and an engaged configuration, in which the shaft is configured to drive the output components of the powertrain. A technical benefit may include easily decoupling the shaft from the output components of the powertrain, thanks to the output clutch.

Optionally in some examples, including in at least one preferred example, when the dog clutch is in the disengaged configuration and the shaft is rotatably decoupled from the output components of the powertrain, the shaft is free to rotate around the main axis.

According to a second aspect of the disclosure, an electric vehicle comprises a controller, an actuator controlled by the controller and a powertrain, the powertrain comprising:
- an electric motor, controlled by the controller,
- a shaft, extending along a main axis and configured to selectively drive output components of the powertrain and be rotatably decoupled from said output components,
- a dog clutch comprising a first set of teeth configured to be driven in rotation around the main axis by the electric motor and a second set of teeth rotatably coupled to the shaft,
wherein the actuator is configured to apply an engaging force on the dog clutch to move the first set of teeth and the second set of teeth towards each other along the main axis, so that the dog clutch is operated by the actuator:
- from a disengaged configuration, in which the first set of teeth is disengaged from the second set of teeth and spaced apart from the second set of teeth so that the shaft is rotatably decoupled from the electric motor;
- to an engaged configuration, in which the first set of teeth is engaged with the second set of teeth so that the shaft is driven in rotation around the main axis by the electric motor,
and wherein the electric vehicle is configured to perform the method described here above.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a schematic view of an exemplary electric vehicle comprising a powertrain having a motor shaft, a main shaft and an output shaft.
**FIG. 2** groups together multiple inserts a) to e), each being a schematic view of parts of the electric vehicle of Figure 1, to illustrate an exemplary method for coupling the motor shaft with the main shaft of the electric vehicle, when the main shaft is decoupled from the output shaft.
**FIG. 3** is a timeline representative of said method for coupling the motor shaft with the main shaft of the electric vehicle of Figure 1, when the main shaft is decoupled from the output shaft.

### DETAILED DESCRIPTION

The detailed description set forth below provides information and examples of the disclosed technology with sufficient detail to enable those skilled in the art to practice the disclosure.

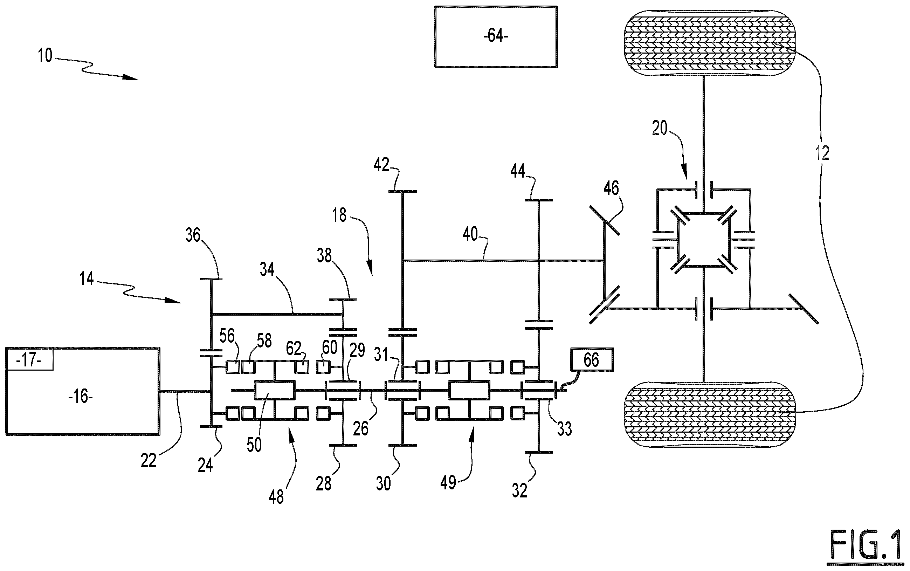

An electric vehicle 10 according to an example is shown in the exemplary diagram of Figure 1. The electric vehicle 10 is for example a heavy-duty electric vehicle, preferably a truck, a bus or a construction equipment, or another type of vehicle, such as an automobile.

The electric vehicle 10 comprises two drive wheels 12 and a powertrain 14. In other examples, the electric vehicle 10 may comprises more than two drive wheels.

The powertrain 14 comprises an electric motor 16, a drivetrain 18 and, preferably, a differential 20. The electric motor 16 comprises a motor shaft 22 on which is mounted a motor gear 24, the motor gear being integral with the motor shaft. The electric motor 16 propels the drive wheels 12 through the drivetrain 18 and the differential 20, that is, the electric motor 16 delivers a motor torque to the drivetrain 18, which is then delivered to the differential 20 and the drive wheels 12. The motor shaft 22 is either a rotor of the electric motor 16 or distinct from the rotor and fixedly attached to the rotor.

The electric vehicle 10 comprises a sensor 17, which is configured to measure a motor torque delivered by the electric motor 16 to the drivetrain 18 and a rotational speed of the electric motor. In the example, the sensor 17 is integrated into the electric motor 16.

The drivetrain 18 comprises a transmission, which is, in the example, a four-speed gearbox. The gearbox comprises a main shaft 26, on which a first main gear 28, a second main gear 30 and a third main gear 32 are mounted to rotate freely about the main shaft. The gearbox also comprises a counter shaft 34, on which are mounted a first counter gear 36, meshing with the motor gear 24, and a second counter gear 38, meshing with the first main gear 28. The first and second counter gears are integral, that is, fixed, with the counter shaft. The gearbox also comprises an output shaft 40, on which are mounted a first output gear 42, meshing with the second main gear 30, a second output gear 44, meshing with the third main gear 32, and a third output gear 46, meshing with a crown gear of the differential 20. The third output gear 46 is also called a pinion gear. The first, second and third output gears are integral, that is, fixed, with the output shaft.

The output shaft 40 and the differential 20 thus act as output components of the powertrain 14, for the main shaft 26.

In the example, the first, second and third main gears 28, 30 and 32 are mounted onto the main shaft 26 through respective bearings 29, 31 and 33. Furthermore, in the example, the motor shaft 22, the main shaft 26, the counter shaft 34 and the output shaft 40 are mounted onto a housing of the electric vehicle 10 through bearings, not shown in Figure 1, so as to freely rotate relative to the housing with minimal friction. Said housing of the electric vehicle 10 is mounted onto a chassis of the electric vehicle.

In the example, the electric motor 16 is powered by a rechargeable battery, not shown in the diagram of Figure 1. As a variant, the electric motor is powered by other means, such as a fuel cell.

The gearbox also comprises a first dog clutch 48 and a second clutch 49. In the example, the second clutch 49 is a dog clutch.

The first dog clutch 48 can be engaged with the motor gear 24 or with the first main gear 28, to couple the motor gear 24 or the first main gear 28 with the main shaft 26. Hence, the first dog clutch 48 can be operated between two engaged configurations: a first engaged configuration, in which the main shaft 26 is directly rotatably coupled to the motor gear 24 and the motor shaft 22, and a second engaged configuration, in which the main shaft 26 is rotatably coupled to the first main gear 28 so as to be coupled to the motor shaft 22 via the counter shaft 34. The first dog clutch 48 can also be operated in a disengaged configuration, in which the main shaft 26 is rotatably decoupled from the motor shaft 22 and from the electric motor 16.

The second clutch 49 can be engaged with the second main gear 30 or with the third main gear 32, to couple the second main gear 30 or the third main gear 32 with the main shaft 26. Hence, the second clutch 49 can be operated between two engaged configurations: a first engaged configuration, in which the main shaft 26 is rotatably coupled to the output shaft 40 via the second main gear 30, and a second engaged configuration, in which the main shaft 26 is rotatably coupled to the output shaft 40 via the third main gear 32. The second clutch 49 can also be operated in a disengaged configuration, in which the main shaft 26 is rotatably decoupled from the output shaft 40, i.e. from the output components of the powertrain 14.

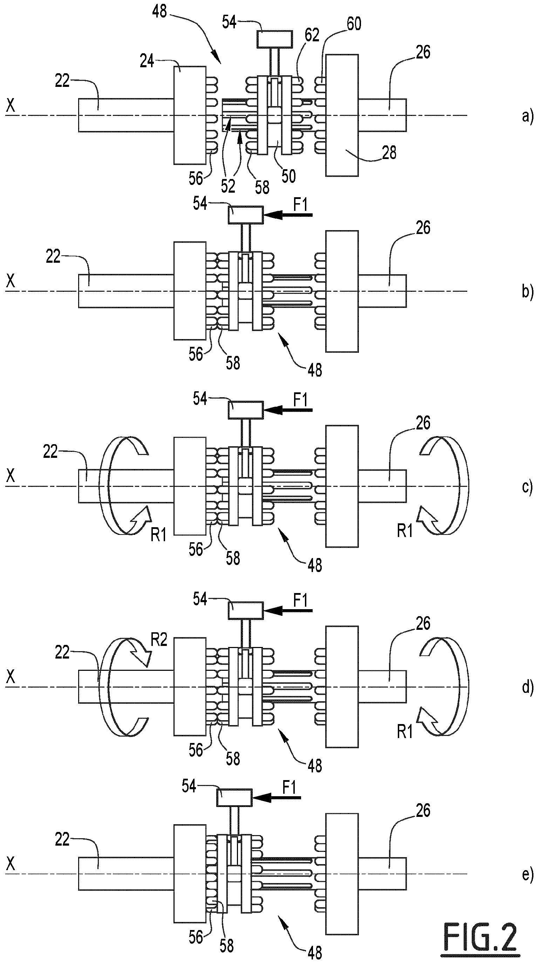

The motor shaft 22 and the main shaft 26 both extend along a main axis X. In other words, the motor shaft 22 and the main shaft 26 are coaxial. The main axis X is only shown in the inserts a) to e) of Figure 2, in which only the motor shaft 22, the main shaft 26 and the first dog clutch 48 are shown.

When the first dog clutch 48 is engaged with the motor gear 24 or with the first main gear 28, a motor torque delivered by the electric motor 16 to the motor shaft 22 is transmitted to the main shaft 26, i.e. the main shaft is driven in rotation by the electric motor.

When the second clutch 49 is engaged with the second main gear 30 or with the third main gear 32, and when the first dog clutch 48 is engaged with the motor gear 24 or with the first main gear 28, a motor torque delivered by the electric motor 16 to the motor shaft 22 is transmitted to the main shaft 26, then to the output shaft 40 and then to the differential 20 and the drive wheels 12.

Hence, when both the first dog clutch 48 and the second clutch 49 are engaged, the drivetrain delivers a motor torque produced by the electric motor 16 to the drive wheels 12, and the drivetrain is said to be in a coupled configuration. It is to be understood that the drivetrain of the example offers four coupled configurations, and therefore the gearbox comprises four speeds, depending of the gears with which the dog clutch 48 and the clutch 49 are engaged.

When the first dog clutch 48 is disengaged from the motor gear 24 and from the first main gear 28, i.e. is in its disengaged configuration, and/or when the second clutch 49 is disengaged from the second main gear 30 and from the third main gear 32, i.e. is in its disengaged configuration, the electric motor 16 is disconnected from the output shaft 40, the differential 20 and the drive wheels 12, and the drivetrain 18 is said to be in an uncoupled configuration. In the example, the drivetrain has three uncoupled configuration.

In a first uncoupled configuration, also known as "full neutral", the first dog clutch 48 and the second clutch 49 are disengaged from the corresponding gears, i.e. they are both in their disengaged configuration, and the main shaft 26 is rotatably decoupled from the motor shaft 22 and rotatably decoupled from the output shaft 40. In other words, in this configuration, the main shaft 26 is a free shaft, i.e. the main shaft is free to rotate around the main axis X relative to the housing of the electric vehicle. The main shaft 26 is considered free to rotate when minimal torque is sufficient to rotate the main shaft. For example, when the second dog clutch 49 is in an engaged configuration, the main shaft 26 is not free to rotate, as a rotation of the main shaft would lead to a rotation of the drive wheels 12, which is only possible with significant torque applied to the main shaft, to overcome friction between the drive wheels 12 and the ground and inertia of the electric vehicle 10. On the contrary, when the first and second dog clutches 48, 49 are both in their disengaged configuration, only friction in the bearings 29, 31 and 33, as well as inertia of the main shaft itself, prevent rotation of the main shaft: this friction and inertia can be overcome with minimal torque applied to the main shaft and thus can be neglected.

In a second uncoupled configuration (only clutch 49 is engaged), the first dog clutch 48 is disengaged from the motor gear 24 and from the first main gear 28, i.e. is in its disengaged configuration and the second clutch 49 is engaged with the second main gear 30 or with the third main gear 32, and the main shaft 26 is not driven by the motor shaft 22, as in the first uncoupled configuration. In other words, the main shaft 26 is rotatably decoupled from the motor shaft 22 and rotatably coupled to the output shaft 40. Hence, the main shaft 26 is not free to rotate around the main axis X relative to the housing of the electric vehicle, as its rotation is dependent of the rotation of the output shaft 40. For example, if the electric vehicle 10 is stationary, wheels 12 prevent rotation of the output shaft 40 and of the main shaft 26.

In a third uncoupled configuration (only dog clutch 48 is engaged), the first dog clutch 48 is engaged with the motor gear 24 or with the first main gear 28 and the second clutch 49 is disengaged from the second main gear 30 and from the third main gear 32, i.e. is in its disengaged configuration, and the main shaft 26 is therefore driven by the motor shaft 22 but the output shaft 40 is not driven by the main shaft 26. In other words, the main shaft 26 is rotatably coupled to the motor shaft 22 and rotatably decoupled from the output shaft 40. Hence, the main shaft 26 is not free to rotate around the main axis X relative to the housing of the electric vehicle, as its rotation is dependent of the rotation of the motor shaft 22.

Hence, the main shaft 26 is configured to selectively drive, or be rotatably decoupled from, the output shaft 40, the differential 20 and the wheels 12, i.e. the output components of the powertrain 14 and the wheels 12, depending on whether the second clutch 49 is engaged or disengaged.

The first dog clutch 48 comprises a carrying structure 50, which is axially moveable along the main axis X. In the example, the carrying structure 50 is mounted on splines 52 of the main shaft 26, in a sliding connection along the main axis X with the main shaft 26. Furthermore, the carrying structure 50 is located, along the main axis X, between the motor gear 24 and the main gear 28.

The first dog clutch 48 comprises an actuator 54, which is configured to apply a force on the carrying structure 50 to move the carrying structure along the main axis X. The actuator 54 is only shown in inserts a) to e) of Figure 2.

The first dog clutch 48 comprises a first set of teeth 56 and a second set of teeth 58, facing each other. The first set of teeth 56 is configured to be driven in rotation around the main axis X by the electric motor 16. In the example, the first set of teeth 56 is mounted on the motor shaft 22, preferably on the motor gear 24. The second set of teeth 58 is rotatably coupled to the shaft 26. In the example, the second set of teeth 58 is mounted on the carrying structure 50. Hence, the second set of teeth is moveable along the main axis X relative to the main shaft 26 and is mounted on the main shaft via the carrying structure 50.

In the first engaged configuration of the dog clutch, the first set of teeth 56 is engaged, i.e. interlocked, with the second set of teeth 58 so that the shaft 26 is driven in rotation around the main axis X by the electric motor 16, directly via the motor gear 24, the first and second sets of teeth 56, 58 and the carrying structure 50.

In the disengaged configuration and in the second engaged configuration of the dog clutch, the first set of teeth 56 is disengaged from the second set of teeth 58 and spaced apart from the second set of teeth.

In the example, the first dog clutch 48 also comprises a third set of teeth 60, mounted on the main gear 28 and a fourth set of teeth 62, mounted on the carrying structure 50 so as to face the third set of teeth 60. Hence, the fourth set of teeth 62 is moveable along the main axis X relative to the main shaft 26.

In the second engaged configuration of the dog clutch, the third set of teeth 60 is engaged, i.e. interlocked, with the fourth set of teeth 62 so that the shaft 26 is driven in rotation around the main axis X by the electric motor 16, via the counter shaft 34.

In the disengaged configuration and in the first engaged configuration of the dog clutch, the third set of teeth 60 is disengaged from the fourth set of teeth 62 and spaced apart from the fourth set of teeth.

The actuator 54 is configured to apply a first force on the dog clutch 48 to move the first set of teeth 56 and the second set of teeth 58 towards each other along the main axis X. More precisely, the first force is applied on the carrying structure 50 and move the second set of teeth 58 towards the first set of teeth 56. This first force also move the third set of teeth 60 and the fourth set of teeth 62 away from each other along the main axis X, by moving the fourth set of teeth 62 away from the third set of teeth 60.

When the dog clutch 48 is in its disengaged configuration, the first force is a first engaging force F1 and operates the dog clutch from its disengaged configuration to its first engaged configuration. When the dog clutch 48 is in its second engaged configuration, the first force is a first disengaging force and operates the dog clutch from its second engaged configuration to its disengaged configuration.

The actuator 54 is also configured to apply a second force on the dog clutch 48, opposed to the first force, to move the first set of teeth 56 and the second set of teeth 58 away from each other along the main axis X. More precisely, the second force is applied on the carrying structure 50 and move the second set of teeth 58 away from the first set of teeth 56. This second force also move the third set of teeth 60 and the fourth set of teeth 62 towards each other along the main axis X, by moving the fourth set of teeth 62 towards the third set of teeth 60.

When the dog clutch 48 is in its disengaged configuration, the second force is a second engaging force and operates the dog clutch from its disengaged configuration to its second engaged configuration. When the dog clutch 48 is in its first engaged configuration, the second force is a second disengaging force and operates the dog clutch from its first engaged configuration to its disengaged configuration.

Preferably, the second clutch 49 is a dog clutch operating in the same way than the first dog clutch 48, with a carrying structure mounted on splines of the main shaft 26 and sets of teeth to engage the main shaft either with the second main gear 30 or with the third main gear 32, the carrying structure being operated by an actuator, not shown, able to move the carrying structure along the main axis X.

The electric vehicle 10 also comprises a controller 64. The controller 64 controls the electric motor 16 and the actuator 54 and collects data provided by the sensor 17.

Preferably, the electric vehicle 10 also comprises a speed sensor 66, configured to provide to the controller 64 data representative of a rotational speed of the main shaft 26 around the main axis X.

As an alternative, not shown, the drivetrain 18 does not comprise the counter shaft 34 and the first main gear 28 and the first dog clutch 48 does not comprise the third and fourth sets of teeth 60, 62. In such an alternative, the main shaft 26 can only be rotatably coupled to the motor shaft 22 via the interlocking of the first and second sets of teeth 56, 58 of the first dog clutch 48.

As an alternative, not shown, the drivetrain 18 comprises only one of the second and third main gears 30, 32.

As an alternative, not shown, the drivetrain 18 does not comprise the output shaft 40 and the second and third main gears 30, 32 are directly meshing with the crown gear of the differential 20.

As an alternative, not shown, the drivetrain 18 comprises other components between the output shaft 40 and the differential 20.

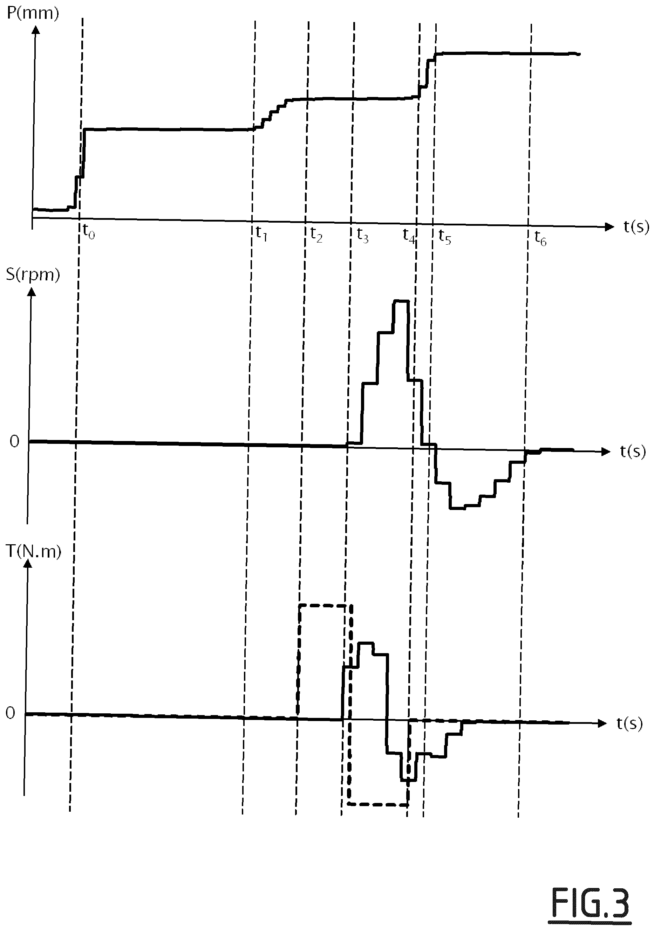

A method, for controlling the powertrain 14 of the electric vehicle 10, is now described, with reference to Figures 2 and 3.

The method aims to couple the main shaft 26 with the motor shaft 22 by operating the dog clutch 48 from its disengaged configuration to its first engaged configuration. Hence, the method aims to couple the main shaft 26 with the motor shaft 22 by engaging the first set of teeth 56 with the second set of teeth 58.

More precisely, the method is used when a blocking of the first dog clutch 48 occurs during coupling operation of the first dog clutch 48 from its disengaged configuration to its first engaged configuration.

The method is performed when the main shaft 26 is in full neutral, i.e. when the main shaft 26 is free to rotate around the main axis X. In other words, the method is performed when the main shaft 26 is rotatably decoupled from the motor shaft 22 and rotatably decoupled from the output components of the powertrain 14, that is, in the example, when both the first dog clutch 48 and the second clutch 48 are in their disengaged configuration.

As shown in insert a) of Figure 2, the method starts by applying, by the actuator 54, the first force on the first dog clutch 48, when the first dog clutch is in the disengaged configuration and the main shaft 26 is rotatably decoupled from the output components of the powertrain, i.e. in full neutral and free to rotate around the main axis X. In other words, the method starts by applying the first engaging force F1 onto the carrying structure 50.

Then, as shown in insert b) of Figure 2, the method continues, as the first engaging force F1 is applied, with detecting, by the controller 64, a blocking of the first dog clutch 48 in an intermediate configuration of the first dog clutch 48, in which the first set of teeth 56 is disengaged from the second set of teeth 58 and in which the first set of teeth 56 is in contact with the second set of teeth 58. In other words, the method comprises detecting, by the controller 64, a blocking of the first dog clutch 48, with the first and second sets of teeth 56, 58 abutting along the main axis X instead of being properly engaged or interlocked. This intermediate configuration is also known as a teeth-to-teeth blockage. In the intermediate configuration, the first engaging force F1 does not allow the first dog clutch 48 to reach its first engaged configuration, because the abutment between the first and second sets of teeth 56, 58 opposes the first engaging force, preventing movement of the second set of teeth 58 towards the first set of teeth 56.

Preferably, the controller 64 detects blocking of the first dog clutch 48 in its intermediate configuration by analyzing a distance between the first set of teeth 56 and the second set of teeth 58, along the main axis X. Said distance is, for example, obtained by analyzing a position of the carrying structure 50 along the main shaft 26 and by comparing said position with a known, fixed, position of the first set of teeth 56 along the main axis. The position of the carrying structure 50 may be known by the actuator 54.

Then, as shown in insert c) of Figure 2, consequently to said detecting of the blocking of the first dog clutch 48 in the intermediate configuration, the method continues with driving in rotation, by the electric motor 16, the motor shaft 22 and thus the first set of teeth 56 around the main axis X in a first direction of rotation R1, while maintaining the first engaging force F1 applied onto the carrying structure 50. The rotation of the first set of teeth 58 in the first direction of rotation R1, combined with the first engaging force F1 being applied, cause the first set of teeth 56 to tend to drive the main shaft 26 in rotation around the main axis X in the first direction of rotation R1, due to the friction of the first set of teeth 56 against the second set of teeth 58 in the intermediate configuration of the dog clutch. In other words, even if the first dog clutch 48 is not properly engaged but blocked in the intermediate position, the friction between the first and second set of teeth 56, 58 is sufficient for the motor shaft 22 to drive in rotation the main shaft 26 in the first direction of rotation R1 around the main axis X, as illustrated in insert c) of Figure 2.

As shown in insert d) of figure 2, consequently to said driving in rotation of the motor shaft 22 and consequently to the main shaft 26 being brought into rotation around the main axis X in the first direction of rotation R1 by friction of the first set of teeth 56 against the second set of teeth 58, the method continues with driving in rotation, by the electric motor 16, the motor shaft 22 and thus the first set of teeth 56 around the main axis X in a second direction of rotation R2 opposite to the first direction of rotation R1, while applying the first engaging force F1. In other words, once the main shaft 26 has been brought in rotation in the first direction of rotation R1 by friction, the motor shaft 22 is rotated in the second direction of rotation R2 opposite to the first. This rotation of the motor shaft 22 opposite to the rotation of the main shaft 26 causes the first set of teeth 56 to tends to slip against the second set of teeth 58, enabling the dog clutch 48 to reach the engaged configuration due to the first engaging force F1.

Indeed, due to the inertia of the main shaft 26 rotating in the first direction of rotation R1, the force of friction between the first and second sets of teeth 56, 58 caused by the first engaging force F1 is insufficient to stop rotation of the main shaft 26 in the first direction of rotation R1 and start rotating the main shaft in the second direction of rotation R2. Hence, a relative movement of rotation between the motor shaft 22 and the main shaft 26 appears once the motor shaft 22 changes its direction of rotation. This relative movement of rotation between the motor shaft 22 and the main shaft 26 causes a shift in the first set of teeth 56 relative to the second set of teeth 58, so that a movement of the second set of teeth 58 towards the first set of teeth 56 under the effect of the first engaging force F1 is no longer prevented. In other words, the relative movement of rotation between the motor shaft 22 and the main shaft 26 allows for the first set of teeth 56 to no longer be aligned with the second set of teeth 58, thus removing the blockage of the first dog clutch 48 in the intermediate position, in other words in the teeth-to-teeth blockage, and allowing the actuator 54 to finish moving the carrying structure 50 towards the first engaged configuration of the first dog clutch 48.

Insert d) illustrates the beginning of the rotation of the motor shaft 22 in the second direction of rotation R2, prior to the slip of the first set of teeth 56 against the second set of teeth 58. Then, as soon as the slip of the first set of teeth 56 against the second set of teeth 58 has resolved the teeth-to-teeth blockage, i.e. once the teeth of the first set of teeth 56 are no longer aligned with the teeth of the second set of teeth 58, along the main axis X, the second set of teeth 58 moves towards the first set of teeth 56, due to the first engaging force F1, thus reaching the first engaged configuration of the first dog clutch 48.

Preferably, the reversing of the direction of rotation of the motor shaft 22, from the first direction of rotation R1 to the second direction of rotation R2, is done quickly so as to prevent the main shaft 26 from maintaining a rotation synchronized with the rotation of the motor shaft.

Advantageously, the reversing of the direction of rotation of the motor shaft 22, from the first direction of rotation R1 to the second direction of rotation R2, is done once the controller 64 detects a rotation of the main shaft 26 around the main axis X in the first direction of rotation R1, for example thanks to data provided by the speed sensor 66. Preferably the direction of rotation of the motor shaft 22 is reversed once the controller 64 detects that the main shaft 26 reaches a rotational speed along the main axis X in the first direction of rotation R1 equal to a predetermined value, for example 20 rpm. More preferably, said predetermined value is comprised between 20 rpm and 80 rpm. Hence, sufficient inertia is given to the main shaft 26 for ensuring slip between the first and second sets of teeth 56, 58 once the electric motor 16 changes its direction of rotation, while avoiding giving too much inertia and speed to the main shaft 26, thus avoiding prolonging the total duration of the method.

However, such detection is optional and the reversing of the direction of rotation of the motor shaft 22, from the first direction of rotation R1 to the second direction of rotation R2, is done after a predetermined amount of time. Such alternative allows for minimizing the duration of the method.

Preferably, as the motor shaft 22 is driven in rotation in the second direction of rotation R2 and as the first engaging force F1 is applied, the method comprises detecting the first dog clutch 48 reaching its first engaged configuration. This detection is performed by the controller 64, for example by analyzing a distance between the first set of teeth 56 and the second set of teeth 58, along the main axis X. Said distance is, for example, obtained by analyzing a position of the carrying structure 50 along the main shaft 26 and by comparing said position with a known, fixed, position of the first set of teeth 56 along the main axis. The position of the carrying structure 50 may be known by the actuator 54. Alternatively, this detection is performed by analyzing the rotational speed of the main shaft 26 around the main axis X, using data provided by the speed sensor 66, and comparing said rotational speed with the rotational speed of the motor shaft 22 around the main axis X, using data provided by the sensor 17.

Consequently, to the detection of the first dog clutch 48 reaching the first engaged configuration, the method further comprises stopping the rotation of the motor shaft 22, by the electric motor 16, and thus stopping the rotation of the first set of teeth 56 and of the main shaft 26. Insert e) illustrates the state of the first dog clutch 48 and of the motor shaft 22 and main shaft 26 consequently to the rotation of the motor shaft 22 being stopped.

Preferably, the controller 64 operates the electric motor 16 so that a duration between the detecting of the blocking of the first dog clutch 48 in the intermediate configuration and the detecting of the first dog clutch reaching its first engaged configuration is equal to or under 500 milliseconds, preferably equal to or under 250 milliseconds.

For example, the controller 64 controls the electric motor 16 so that a duration of the rotation of the motor shaft 22 around the main axis X in the first direction of rotation R1 is equal to or under 250 milliseconds, preferably equal to or under 125 milliseconds, more preferably equal to or under 70 milliseconds. For embodiments in which the reversing of the direction of rotation of the motor shaft 22, from the first direction of rotation R1 to the second direction of rotation R2, is done after a predetermined amount of time, this predetermined amount of time is preferably equal to said duration: preferably equal to 250 milliseconds, more preferably equal to 125 milliseconds, most preferably equal to 70 milliseconds.

A duration under 250 milliseconds for the rotation of the motor shaft 22 around the main axis X in the first direction of rotation R1 ensures that friction between the first and second sets of teeth 56, 58 is only occurring during a short period of time, thus minimizing tooth wear of the first and second sets of teeth 56, 58 and increasing durability of the first dog clutch 48.

For example, the controller 64 controls the electric motor 16 so that a duration of the rotation of the motor shaft 22 around the main axis X in the second direction of rotation R2 is equal to or under 250 milliseconds, preferably equal to or under 125 milliseconds, more preferably equal to or under 70 milliseconds.

Hence, the main shaft 26 is engaged with the motor shaft 22 quickly, ensuring the rotation of the electric motor 16 in both the first then the second direction of rotation R1, R2 is minimally perceived by a driver of the electric vehicle 10. In particular, a duration under 500 milliseconds, between the detecting of the blocking of the first dog clutch 48 in the intermediate configuration and the detecting of the first dog clutch reaching its first engaged configuration, ensures that minimal vibration and noise are caused and transmitted to other components of the electric vehicle 10. The method thus allows for smooth and safe coupling of the main shaft 26 with the motor shaft 22.

Preferably, the first engaging force F1 is applied by the actuator 54 to the first dog clutch 48 continuously between the detection of the blocking of the first dog clutch in the intermediate configuration and the detection of the first dog clutch reaching its first engaged configuration.

Preferably, the controller 64 controls the electric motor 16 so that a maximum torque applied by the electric motor 16 to the motor shaft 22, hence to the first set of teeth 56, during rotation of the motor shaft in the first direction of rotation R1 is lower than or equal to 50 Nm, preferably lower than or equal to 20 Nm. Indeed, such torque is sufficient to drive the main shaft 26 in rotation by friction between the first and second sets of teeth 56, 58 under the effect of the first engaging force F1, and a higher torque could lead to the main shaft rotating too fast around the main axis X. Practically speaking, the maximum torque applied by the electric motor 16 to the motor shaft 22 is dependent on the conception of the powertrain 14, in particular on the inertia of the gearbox, and the values given here above are adapted when the electric vehicle 10 is a truck. Preferably, the maximum torque applied by the electric motor 16 to the motor shaft 22 is chosen so that the rotational speed of the main shaft 26 remains under 80 rpm while performing the method.

Preferably, the controller 64 controls the electric motor 16 so that the maximum torque applied by the electric motor 16 to the motor shaft 22, hence to the first set of teeth 56, during rotation of the motor shaft in the second direction of rotation R2 is lower than, or equal to, a maximum torque applied by the electric motor 16 to the motor shaft during rotation of the motor shaft in the first direction of rotation R1. Indeed, the maximum torque in the second direction of rotation R2 does not need to be higher than the maximum torque in the first direction of rotation to cause slippage between the first and second sets of teeth 56, 58 and engagement of the first dog clutch 48 in its first engaged configuration. In addition, this limits the risks of the main shaft 26 to be driven in rotation in the second direction of rotation R2 after engagement of the first dog clutch 48, as the electric motor 16 can be stopped faster when a lower torque is applied to the motor shaft 22.

In the exemplary timeline of Figure 3, showing an exemplary application of the method to an exemplary electric vehicle, the top graph shows the evolution of the position of the carrying structure 50 during performing of the method. Arbitrarily, the original value of the graph corresponds to the position of the carrying structure 50 in the disengaged configuration of the first dog clutch 48 and greater values correspond to the carrying structure 50 moving closer to the first set of teeth 56. The middle graph shows the evolution of the rotational speed of the motor shaft 22 during performing of the method, with positive values corresponding to rotation in the first direction of rotation R1 and negative values corresponding to rotation in the second direction of rotation R2. The bottom graph shows the evolution of the torque applied by the electric motor 16 to the motor shaft 22 during performing of the method.

At time t₀, a command for the first dog clutch 48 to be engaged in its first engaged configuration is emitted, either by a user of the electric vehicle 10 or by the controller 64. This command leads to the controller 64 to operate the actuator 54 so as to move closer to the first set of teeth 56, at a predetermined distance, preparing the first dog clutch 48 for engagement. As visible in the middle and bottom graphs, at this time, the electric motor 16 is not turning.

At time t₁, the controller 64 operates the actuator 54 to move the carrying structure 50 towards the first engaged configuration of the dog clutch 48.

At time t₂, the controller 64 detects a blocking of the first dog clutch 48 in its intermediate configuration, because the carrying structure 50 stopped moving before reaching the first engaged configuration of the dog clutch 48. Simultaneously, the controller 64 commands the electric motor 16 to move in the first direction of rotation R1: this is illustrated by the dotted line in the bottom graph, representing the command issued by the controller 64.

Due to the latency in starting the electric motor 16, the electric motor does not immediately starts rotating once said command is issued by the controller 64, but only starts rotating at time t₃. Hence, starting at time t₃, the motor shaft 22 starts rotating in the first direction of rotation, driving the main shaft 26 by friction between the first and second sets of teeth 56, 58.

After a predetermined duration, in the example 70 milliseconds, the controller 64 commands the electric motor to move in the second direction of rotation R2. Due to latency, the electric motor 16 reverses its direction of rotation, to start rotating in the second direction of rotation R2, after about 50 milliseconds, between time t₃ and time t₄.

Then, after the motor shaft 22 has changed its direction of rotation, more precisely at time t₄, the relative movement between the motor shaft 22 and the main shaft 26, cause slippage between the first and second sets of teeth 56, 58, thus unblocking the first dog clutch 48 from its intermediate configuration. This is visible in the top graph, in which the carrying structure 50 starts moving again towards the first set of teeth 56 at time t₄.

Then, the first engaged configuration of the first dog clutch 48 is reached at time t₅. As visible in the middle and bottom graphs, at time t₅, the electric motor 16 is still applying a torque to the motor shaft 22 and the motor shaft is still rotating in the second direction of rotation R2.

Then, for example once the controller 64 detects that the first dog clutch 48 reached its first engaged configuration, the controller 64 command the electric motor 16 to stop rotating, leading to the main shaft 22 to stop rotating at time t₆.

It is to be noted that the method described herein is not applicable with a vehicle having an internal combustion engine, because such engines cannot change direction of rotation, nor can they be started and stopped in such short periods.

Example 1: a method, for controlling a powertrain 14 of an electric vehicle 10, wherein the electric vehicle 10 comprises a controller 64 and an actuator 54 controlled by the controller 64, the powertrain 14 comprising:
- an electric motor 16, controlled by the controller 64,
- a shaft 26, extending along a main axis X and configured to selectively drive output components of the powertrain 14 and be rotatably decoupled from said output components,
- a dog clutch 48 comprising a first set of teeth 56 configured to be driven in rotation around the main axis X by the electric motor 16 and a second set of teeth 58 rotatably coupled to the shaft 26,
wherein the actuator 54 is configured to apply an engaging force F1 on the dog clutch 48 to move the first set of teeth 56 and the second set of teeth 58 towards each other along the main axis X, so that the dog clutch 48 is operated by the actuator 54:
- from a disengaged configuration, in which the first set of teeth 56 is disengaged from the second set of teeth 58 and spaced apart from the second set of teeth 58 so that the shaft 26 is rotatably decoupled from the electric motor 16;
- to an engaged configuration, in which the first set of teeth 56 is engaged with the second set of teeth 58 so that the shaft 26 is driven in rotation around the main axis X by the electric motor 16,
the method comprising:
- when the dog clutch 48 is in the disengaged configuration and the shaft 26 is rotatably decoupled from the output components of the powertrain 14, applying the engaging force F1, by the actuator 54,
- as the engaging force F1 was applied, detecting, by the controller 64, a blocking of the dog clutch 48 in an intermediate configuration of the dog clutch 48, in which the first set of teeth 56 is disengaged from the second set of teeth 58 and in which the first set of teeth 56 is in contact with the second set of teeth 58,
- consequently to said detecting of the blocking of the dog clutch in the intermediate configuration, driving in rotation the first set of teeth 56 around the main axis X in a first rotation direction R1, by the electric motor 16, while applying the engaging force F1 so that the first set of teeth 56 tends to drive the shaft 26 in rotation around the main axis X in the first direction of rotation R1 by friction of the first set of teeth 56 against the second set of teeth 58 in the intermediate configuration of the dog clutch,
- consequently to said driving in rotation of the first set of teeth 56 and consequently to the shaft 26 being brought into rotation around the main axis X in the first direction of rotation R1 by friction of the first set of teeth 56 against the second set of teeth 58, driving in rotation the first set of teeth 56 around the main axis X in a second direction of rotation R2 opposite to the first direction of rotation R1, by the electric motor 16, while applying the engaging force F1, so that the first set of teeth 56 tends to slip against the second set of teeth 58 rotating in the first direction of rotation R1, enabling the dog clutch 48 to reach the engaged configuration due to the engaging force F1.

Example 2: the method of example 1, further comprising, as the first set of teeth 56 tends to drive the shaft 26 in rotation around the main axis X in the first direction of rotation R1, detecting, by the controller 64, a rotation of the shaft 26 around the main axis X in the first direction of rotation R1, and wherein the first set of teeth 56 is driven in rotation around the main axis X in the second direction of rotation R2 consequently to said detecting of the rotation of the shaft 26.

Example 3: the method of example 2, wherein the electric vehicle 10 further comprises a speed sensor 66, configured to provide to the controller 64 data representative of a rotational speed of the shaft 26 around the main axis X, and wherein the controller 64 detects a rotation of the shaft 26 around the main axis X in the first direction of rotation R1 using said data provided by the speed sensor 66.

Example 4: the method of any one of examples 1-3, wherein the controller 64 detects blocking of the dog clutch 48 in its intermediate configuration by analyzing a distance between the first set of teeth 56 and the second set of teeth 58, along the main axis X.

Example 5: the method of any one of examples 1-4, further comprising, as the first set of teeth 56 is driven in rotation around the main axis X in the second direction of rotation R2 while the engaging force F1 is applied, detecting, by the controller 64, the dog clutch 48 reaching the engaged configuration.

Example 6: the method of example 5, wherein the controller 64 operates the electric motor 16 so that a duration between the detecting of the blocking of the dog clutch 48 in the intermediate configuration and the detecting of the dog clutch reaching the engaged configuration is equal to or under 500 milliseconds, preferably equal to or under 250 milliseconds.

Example 7: the method of any one of examples 5-6, further comprising, consequently to said detecting of the dog clutch 48 reaching the engaged configuration, stopping the rotation of the first set of teeth 56 around the main axis X, by the electric motor 16.

Example 8: the method of any one of examples 5-7, wherein the actuator 54 continuously applies the engaging force F1 to the dog clutch 48 between the detection of the blocking of the dog clutch in the intermediate configuration and the detection of the dog clutch reaching the engaged configuration.

Example 9: the method of any one of examples 1-8, wherein the controller 64 controls the electric motor 16 so that a duration of the rotation of the first set of teeth 56 around the main axis X in the first direction of rotation R1 is equal to or under 250 milliseconds and wherein the controller 64 controls the electric motor 16 so that a duration of the rotation of the first set of teeth 56 around the main axis X in the second direction of rotation R2 is equal to or under 250 milliseconds.

Example 10: the method of any one of examples 1-9, wherein the controller 64 controls the electric motor 16 so that a maximum torque applied by the electric motor 16 to the first set of teeth 56 during rotation of the first set of teeth in the first direction of rotation R1 is lower than 50 Nm.

Example 11: the method of any one of examples 1-10, wherein the controller 64 controls the electric motor 16 so that a maximum torque applied by the electric motor 16 to the first set of teeth 56 during rotation of the first set of teeth in the second direction of rotation R2 is lower than, or equal to, a maximum torque applied by the electric motor 16 to the first set of teeth 56 during rotation of the first set of teeth in the first direction of rotation R1.

Example 12: the method of any one of examples 1-11, wherein the second set of teeth 58 is mounted on a carrying structure 50 of the dog clutch 48, the carrying structure being mounted on splines 52 of the shaft 26, in a sliding connection along the main axis X with the shaft, and wherein the actuator 54 is configured to apply the engaging force F1 on the carrying structure 50.

Example 13: the method of any one of examples 1-12, wherein the first set of teeth 56 is mounted on a motor shaft 22 of the powertrain 14 extending along the main axis X and configured to be driven in rotation around the main axis X by the electric motor 16.

Example 14: the method of example 13, wherein the first set of teeth 56 is mounted on a gear 24 of the motor shaft 22.

Example 15: the method of any one of examples 1-14, wherein the actuator 54 is further configured to apply a disengaging force on the dog clutch 48, opposed to the engaging force F1, to move the first set of teeth 56 and the second set of teeth 58 away from each other along the main axis X, so that the dog clutch 48 is operated by the actuator 54 from its engaged configuration to its disengaged configuration.

Example 16: the method of any one of examples 1-15, wherein the powertrain 14 further comprises an output clutch 49 configured to be operated between:
- a disengaged configuration, in which the shaft 26 is configured to be rotatably decoupled from the output components of the powertrain 14, and
- an engaged configuration, in which the shaft 26 is configured to drive the output components of the powertrain.

Example 17: the method of any one of examples 1-16, wherein, when the dog clutch 48 is in the disengaged configuration and the shaft 26 is rotatably decoupled from the output components of the powertrain, the shaft 26 is free to rotate around the main axis X.

Example 18: an electric vehicle 10 comprising a controller 64, an actuator 54 controlled by the controller 64 and a powertrain 14, the powertrain comprising:
- an electric motor 16, controlled by the controller 64,
- a shaft 26, extending along a main axis X and configured to selectively drive output components of the powertrain 14 and be rotatably decoupled from said output components,
- a dog clutch 48 comprising a first set of teeth 56 configured to be driven in rotation around the main axis X by the electric motor 16 and a second set of teeth 58 rotatably coupled to the shaft 26,
wherein the actuator 54 is configured to apply an engaging force F1 on the dog clutch 48 to move the first set of teeth 56 and the second set of teeth 58 towards each other along the main axis X, so that the dog clutch 48 is operated by the actuator 54:
- from a disengaged configuration, in which the first set of teeth 56 is disengaged from the second set of teeth 58 and spaced apart from the second set of teeth 58 so that the shaft 26 is rotatably decoupled from the electric motor 16;
- to an engaged configuration, in which the first set of teeth 56 is engaged with the second set of teeth 58 so that the shaft 26 is driven in rotation around the main axis X by the electric motor 16,
and wherein the electric vehicle 10 is configured to perform the method according to any one of examples 1-17.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method, for controlling a powertrain (14) of an electric vehicle (10), wherein the electric vehicle (10) comprises a controller (64) and an actuator (54) controlled by the controller (64), the powertrain (14) comprising:
- an electric motor (16), controlled by the controller (64),
- a shaft (26), extending along a main axis (X) and configured to selectively drive output components of the powertrain (14) and be rotatably decoupled from said output components,
- a dog clutch (48) comprising a first set of teeth (56) configured to be driven in rotation around the main axis (X) by the electric motor (16) and a second set of teeth (58) rotatably coupled to the shaft (26),
wherein the actuator (54) is configured to apply an engaging force (F1) on the dog clutch (48) to move the first set of teeth (56) and the second set of teeth (58) towards each other along the main axis (X), so that the dog clutch (48) is operated by the actuator (54):
- from a disengaged configuration, in which the first set of teeth (56) is disengaged from the second set of teeth (58) and spaced apart from the second set of teeth (58) so that the shaft (26) is rotatably decoupled from the electric motor (16);
- to an engaged configuration, in which the first set of teeth (56) is engaged with the second set of teeth (58) so that the shaft (26) is driven in rotation around the main axis (X) by the electric motor (16),
the method comprising:
- when the dog clutch (48) is in the disengaged configuration and the shaft (26) is rotatably decoupled from the output components of the powertrain (14), applying the engaging force (F1), by the actuator (54),
- as the engaging force (F1) was applied, detecting, by the controller (64), a blocking of the dog clutch (48) in an intermediate configuration of the dog clutch (48), in which the first set of teeth (56) is disengaged from the second set of teeth (58) and in which the first set of teeth (56) is in contact with the second set of teeth (58),
- consequently to said detecting of the blocking of the dog clutch in the intermediate configuration, driving in rotation the first set of teeth (56) around the main axis (X) in a first rotation direction (R1), by the electric motor (16), while applying the engaging force (F1) so that the first set of teeth (56) tends to drive the shaft (26) in rotation around the main axis (X) in the first direction of rotation (R1) by friction of the first set of teeth (56) against the second set of teeth (58) in the intermediate configuration of the dog clutch,
- consequently to said driving in rotation of the first set of teeth (56) and consequently to the shaft (26) being brought into rotation around the main axis (X) in the first direction of rotation (R1) by friction of the first set of teeth (56) against the second set of teeth (58), driving in rotation the first set of teeth (56) around the main axis (X) in a second direction of rotation (R2) opposite to the first direction of rotation (R1), by the electric motor (16), while applying the engaging force (F1), so that the first set of teeth (56) tends to slip against the second set of teeth (58) rotating in the first direction of rotation (R1), enabling the dog clutch (48) to reach the engaged configuration due to the engaging force (F1).

2. The method of claim 1, further comprising, as the first set of teeth (56) tends to drive the shaft (26) in rotation around the main axis (X) in the first direction of rotation (R1), detecting, by the controller (64), a rotation of the shaft (26) around the main axis (X) in the first direction of rotation (R1), and wherein the first set of teeth (56) is driven in rotation around the main axis (X) in the second direction of rotation (R2) consequently to said detecting of the rotation of the shaft (26).

3. The method of claim 2, wherein the electric vehicle (10) further comprises a speed sensor (66), configured to provide to the controller (64) data representative of a rotational speed of the shaft (26) around the main axis (X), and wherein the controller (64) detects a rotation of the shaft (26) around the main axis (X) in the first direction of rotation (R1) using said data provided by the speed sensor (66).

4. The method of any one of claims 1-3, wherein the controller (64) detects blocking of the dog clutch (48) in its intermediate configuration by analyzing a distance between the first set of teeth (56) and the second set of teeth (58), along the main axis (X).

5. The method of any one of claims 1-4, further comprising, as the first set of teeth (56) is driven in rotation around the main axis (X) in the second direction of rotation (R2) while the engaging force (F1) is applied, detecting, by the controller (64), the dog clutch (48) reaching the engaged configuration.

6. The method of claim 5, wherein the controller (64) operates the electric motor (16) so that a duration between the detecting of the blocking of the dog clutch (48) in the intermediate configuration and the detecting of the dog clutch reaching the engaged configuration is equal to or under 500 milliseconds, preferably equal to or under 250 milliseconds.

7. The method of any one of claims 5-6, further comprising, consequently to said detecting of the dog clutch (48) reaching the engaged configuration, stopping the rotation of the first set of teeth (56) around the main axis (X), by the electric motor (16).

8. The method of any one of claims 5-7, wherein the actuator (54) continuously applies the engaging force (F1) to the dog clutch (48) between the detection of the blocking of the dog clutch in the intermediate configuration and the detection of the dog clutch reaching the engaged configuration.

9. The method of any one of claims 1-8, wherein the controller (64) controls the electric motor (16) so that a duration of the rotation of the first set of teeth (56) around the main axis (X) in the first direction of rotation (R1) is equal to or under 250 milliseconds and wherein the controller (64) controls the electric motor (16) so that a duration of the rotation of the first set of teeth (56) around the main axis (X) in the second direction of rotation (R2) is equal to or under 250 milliseconds.

10. The method of any one of claims 1-9, wherein the controller (64) controls the electric motor (16) so that a maximum torque applied by the electric motor (16) to the first set of teeth (56) during rotation of the first set of teeth in the second direction of rotation (R2) is lower than, or equal to, a maximum torque applied by the electric motor (16) to the first set of teeth (56) during rotation of the first set of teeth in the first direction of rotation (R1).

11. The method of any one of claims 1-10, wherein the second set of teeth (58) is mounted on a carrying structure (50) of the dog clutch (48), the carrying structure being mounted on splines (52) of the shaft (26), in a sliding connection along the main axis (X) with the shaft, and wherein the actuator (54) is configured to apply the engaging force (F1) on the carrying structure (50).

12. The method of any one of claims 1-11, wherein the first set of teeth (56) is mounted on a motor shaft (22) of the powertrain (14) extending along the main axis (X) and configured to be driven in rotation around the main axis (X) by the electric motor (16).

13. The method of any one of claims 1-12, wherein the powertrain (14) further comprises an output clutch (49) configured to be operated between:
- a disengaged configuration, in which the shaft (26) is configured to be rotatably decoupled from the output components of the powertrain (14), and
- an engaged configuration, in which the shaft (26) is configured to drive the output components of the powertrain.

14. The method of any one of claims 1-13, wherein, when the dog clutch (48) is in the disengaged configuration and the shaft (26) is rotatably decoupled from the output components of the powertrain, the shaft (26) is free to rotate around the main axis (X).

15. An electric vehicle (10) comprising a controller (64), an actuator (54) controlled by the controller (64) and a powertrain (14), the powertrain comprising:
- an electric motor (16), controlled by the controller (64),
- a shaft (26), extending along a main axis (X) and configured to selectively drive output components of the powertrain (14) and be rotatably decoupled from said output components,
- a dog clutch (48) comprising a first set of teeth (56) configured to be driven in rotation around the main axis (X) by the electric motor (16) and a second set of teeth (58) rotatably coupled to the shaft (26),
wherein the actuator (54) is configured to apply an engaging force (F1) on the dog clutch (48) to move the first set of teeth (56) and the second set of teeth (58) towards each other along the main axis (X), so that the dog clutch (48) is operated by the actuator (54):
- from a disengaged configuration, in which the first set of teeth (56) is disengaged from the second set of teeth (58) and spaced apart from the second set of teeth (58) so that the shaft (26) is rotatably decoupled from the electric motor (16);
- to an engaged configuration, in which the first set of teeth (56) is engaged with the second set of teeth (58) so that the shaft (26) is driven in rotation around the main axis (X) by the electric motor (16),
and wherein the electric vehicle (10) is configured to perform the method according to any one of claims 1-14.
